# EUROPEAN PATENT SPECIFICATION

(11) **EP 1 653 122 B1**
(45) Date of publication and mention of the grant of the patent: **08.10.2008**
(21) Application number: 05110060.0
(22) Date of filing: 27.10.2005
(51) Int. Cl.: F16H 7/12, A01D 41/00

(54) **Belt drive for a harvester with a movable cutter.**
Riemenantrieb für Mähdrescher mit beweglichem Schneider
Entraînement à courroie pour moissonneuse-batteuse avec un outil de coupe mobil

(30) Priority: 27.10.2004 GB 0423798
(43) Date of publication of application: 03.05.2006
(73) Proprietor: CNH Belgium N.V., 8210 Zedelgem (BE)
(72) Inventor: Maertens, Eric A.H., 8200, Brugge (BE); Willem, Pieter J.P., 8470, Gistel (BE)
(74) Representative: CNH IP Department

(56) References cited:
- EP-A- 0 282 311
- US-A- 4 069 650
- US-A- 5 557 912
- US-A- 5 769 747
- US-A- 5 778 644

## Description

### Field of the invention

The present invention relates to a belt drive for a harvester with a movable cutter, according to the preamble of claim 1 and as it is disclosed in EP 0 282 311 A.

### Background of the invention

One type of header that is fitted to combine and forage harvesters comprises a reel that extends transversely to the direction of travel. A scissor-action cutter located beneath the reel cuts the stalks of the crop, spring tines projecting from the rotating reel pick up the cut crop and pushes them on to two augers that advance the crop towards the centre of the harvester. From there, the crop is carried into the processing machinery of the harvester.

The ideal distance between the cutter and the auger depends on the type of crop being harvested and it is known to mount the cutter in such a manner that it can be moved forwards and backwards relative to the auger. The cutter is formed of two blades, one being movable in a reciprocated movement relative to the other by means of a so-called wobble box, the cutter and its drive mechanism being mounted on a sub-frame that can be moved relative to the main frame of the header by some 50 cms, typically. The wobble box has a drive pulley that is driven by a belt which passes over a stationary powered pulley mounted on the main frame of the header. A belt configuration is therefore required which does not obstruct the movement of the cutter sub-frame yet which maintains the drive belt under the correct tension to drive the wobble box in all positions of the cutter sub-frame.

The geometry of the belt drive for a movable cutter of a harvester is further complicated by the magnitude of the permissible movement because it is necessary to ensure that the different runs of the belt never touch one another in any position of the cutter sub-frame. Furthermore, the belt and its various drive, guide and tensioning pulleys must all remain protected within a housing that covers the entire drive mechanism to prevent entanglement of the crop.

Prior art attempts to meet the above criteria have resulted in belt geometries having as many as eight different pulleys and, despite their complexity, holes were needed in the frame to allow pulleys to be repositioned to achieve the desired belt tension in different positions of the cutter.

An alternative solution is shown in US-4,069,650. A header is shown having a reel to assist in the gathering of the crop. The reel is mounted on a pair of arms to allow the reel to move up and downwards. A tensioning system is foreseen to tension the belt which drives the reel. The tension in the belt needs to be maintained in any position of the reel. This is accomplished by movement of a pulley with a tensioning system around a pivot point when the reel is moved. The pivot point is located on the stationary part of the cylinder and this causes the movement of the pulley to be almost equal to the movement of the drive pulley. Since the pulley is pivotable around a pivot point, it will need a certain clearance to allow movement with the drive pulley. So, although this could offer an alternative to tension the drive belt for the cutter, it will require a large shielding and decreases the visibility towards the sides of the header.

### Summary of the invention

In accordance with the present invention, there is provided a belt drive for connecting a stationary pulley to a relatively movable pulley, comprising a first guide pulley mounted in a fixed position in relation to the stationary pulley and a second guide pulley mounted for movement with the movable pulley, the second guide pulley is mounted in such a manner as to be capable of a limited degree of movement relative to the movable pulley and is spring biased in a direction to maintain a belt in tension. Two support pulleys are provided to contact the opposite sides of the run of the belt that extends from the stationary pulley to the movable pulley. One of the support pulleys is stationary and the other is movable with the movable pulley, the run extending between the two support pulleys being one of the two runs of varying length.

In the prior art, the first guide pulley, that is to say the one mounted on the same frame as the stationary pulley, was used as the belt tensioner. To avoid its interfering with components mounted on the same sub-frame as the movable pulley, this necessitated that the movement of the tensioning pulley should be confined to a rectilinear motion. To achieve this, the axle of the tensioning pulley was supported for movement along two parallel guide tracks which made for a complex and costly construction.

In the present invention, the second guide pulley that is mounted for movement with the movable pulley is the one that is used as the belt tensioning pulley. Such mounting of the tensioning pulley makes for a simpler and more compact construction in that the movement of the tensioning pulley need no longer be rectilinear.

Conveniently, the second guide pulley is carried on one end of a lever arm that is pivotably mounted on a sub-frame supporting the movable pulley, the opposite end of the lever being acted upon by a spring acting to rotate the lever arm in a direction to increase the belt tension. Since these changes in length of the belt occur during the lifetime of the belt and the tensioning of the belt is done automatically by the spring biased rod, the driver does not need to follow up the stretching of the belt or take care of it.

The path traced by the belt around the pulleys includes two runs that change in length during displacement of the movable pulley. In preferred embodiment of the invention, the relative positions of the pulleys are such that while the length of one of these two runs increases the length of the other decreases by a substantially equal amount, whereby the length of the path traced by the belt does not change significantly with the position of the movable pulley relative to the stationary pulley.

If the length of the path traced by the belt does not vary significantly with movement of the movable pulley, the amount of movement required of the belt tensioner pulley in order to take up the slack in the belt is reduced.

Because of the extent of possible movement of the cutter, the distance between the stationary and movable pulleys may be too long when the cutter is moved into its most forward position to be spanned by a single run of the belt. It is therefore advantageous to provide two support pulleys to contact the opposite sides of the run of the belt that extends from the stationary pulley to the movable pulley.

In this case, one of the support pulleys may be stationary and the other movable with the movable pulley, the run extending between the two support pulleys being one of the two runs of varying length.

### Brief description of the drawings

The invention will now be described further, by way of example, with reference to the accompanying drawings, in which:
Figure 1 is a schematic representation of a known belt drive for a harvester header having a movable cutter,
Figure 2 shows the belt drive of Figure 1 when the cutter is moved forwards,
Figure 3 is a similar schematic representation of a belt drive of the invention, and
Figures 4 and 5 are views of parts of the belt drive shown in Figure 3, drawn to an enlarged scale, showing the configuration of the belt drive in different positions of the movable pulley.

### Detailed description of the preferred embodiment

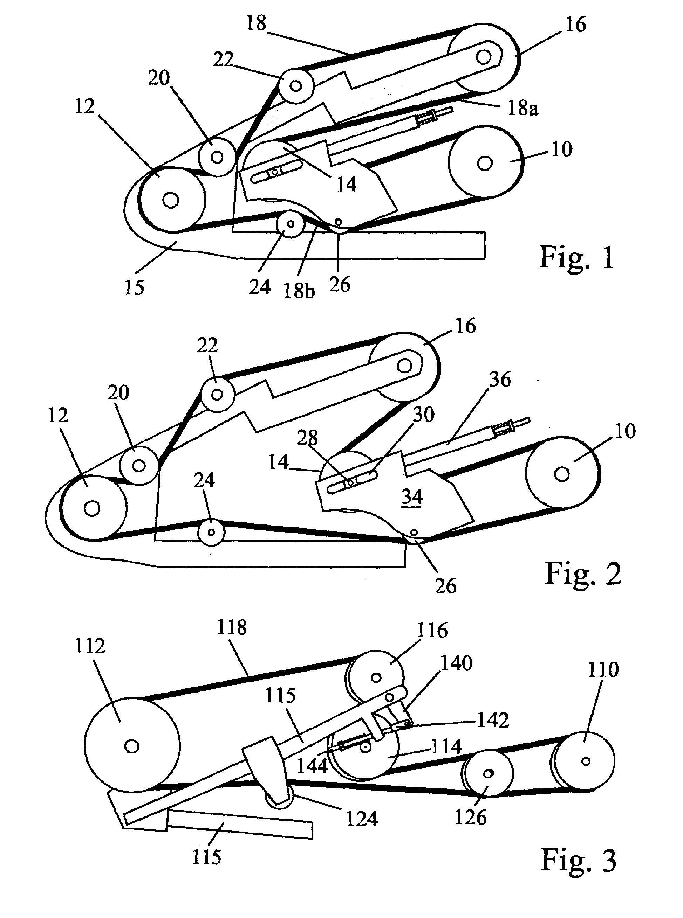

In Figures 1 and 2, a drive pulley 10 is mounted on the frame of the header of a harvester and is connected by a chain and sprocket transmission (not shown) for rotation with the auger of the header. A driven pulley 12 is mounted on a sub-frame 15 which is movable relative to the frame of the header. The pulley 12 is fitted to the input shaft of a wobble box that reciprocates one of the blades of the cutter. A first guide pulley 14 is mounted on the frame of the header and a second guide pulley 16 is mounted on the movable sub-frame 15. The belt 18, if passing only around the above four pulleys mentioned above, would include two long runs from the pulley 12 to the pulleys 10 and 16. To avoid excessive transverse movement of the belt 18 along these two runs, they are each guided over a respective pair of support pulleys. The pulleys 20 and 22 supporting the run of the belt 18 between the pulleys 12 and 16 are mounted on the movable sub-frame 15 whereas of the two pulleys 24 and 26 supporting the run of the belt 18 extending between the pulleys 12 and 10, the pulley 24 is mounted on the sub-frame 15 and the pulley 26 is stationarily mounted on the frame of the header.

The guide pulley 14 acts as a tensioning pulley and its axle 28 is guided for movement along slots 30 in a bracket 34 that is secured to the frame of the header. The axle of the pulley 14 is received in a clevis that slides along the slots 30 and is connected to a rod 36 that applies a spring bias to the axle to maintain the belt 18 in tension in all positions of the pulley 12.

A comparison of Figures 1 and 2 will show that when the sub-frame 15 and the various pulleys mounted on it are moved, only two runs of the belt change in length, namely the run 18a that extends between the pulleys 14 and 16 and the run 18b that extends between the pulleys 24 and 26. Because of the geometry of the pulleys, these two runs do not change in length by equal amounts and the length of the path traced by the belt changes significantly as the sub-frame 15 moves. The tensioning roller 14 needs therefore a considerable degree of travel to take up the slack created in the belt. This is in addition to the movement of the tensioning pulley 16 that is required to compensate for stretching of the belt 18 as it ages. For this reason, in the prior art, in addition to providing long slots 30 for the movement of pulley 14, holes (not shown) were provided into the sub-frame 15 to allow the pulley 16 to be repositioned when necessary.

It will also be noted, from Figure 1 in particular, that the space in which one can accommodate a tensioning pulley capable of a large degree of travel is severely limited and consequently, the tensioning pulley 14 needs to be guided for linear movement.

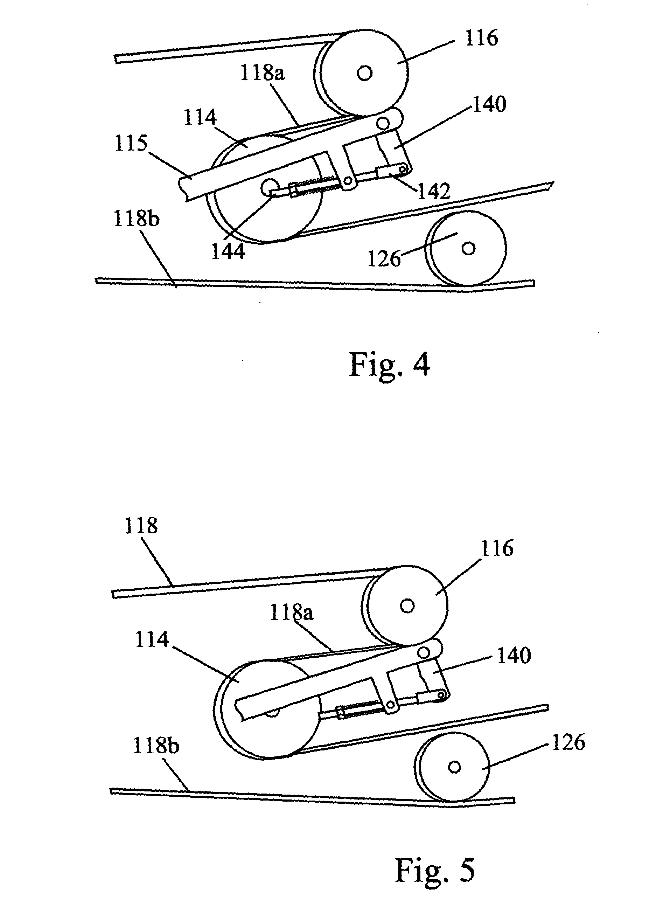

In the embodiment of the invention now to be described with reference to Figures 3 to 5, in order to avoid unnecessary repetition, items that serve the same function as described with reference to Figures 1 and 2 have been allocated the same reference numerals in the one hundred series (i.e. 100 has been added to the numerical values of each reference numeral).

The embodiment of the invention differs from the prior art belt drive shown in Figures 1 and 2 in that the run that extends between the pulleys 112 and 116 does not require the addition of a support pulley as it does not risk to interfere with any other part of the belt drive in any position of the sub-frame 115. All the remaining pulleys do however have counterparts in the embodiment of Figures 3 to 5.

An important difference between the embodiment of the invention and the prior art is that in this case the pulley 114 is directly mounted on the frame of the header and it is the pulley 116 that acts as the tensioning pulley for the belt 118. Furthermore, the pulley 116 is not guided for rectilinear motion but is instead carried by a lever arm 140 which is pivoted at its centre on the sub-frame 115. The axle of the pulley 116 is mounted on one end of the lever arm 140 and the other end of the lever arm 140 is connected to a clevis 142 on one end of a spring biased rod 144 which biases the lever arm 140 in a clockwise direction to maintain the belt 118 under tension.

A further important difference resides in the geometry of the pulleys. If the runs 118a and 118b were to lie parallel to one another and parallel to the direction of movement of the pulley 112, there would be no change in the length of the path traced by the belt 118 in the different positions of the sub-frame 115. Because this is difficult to achieve, on account of the need to support the run of the belt between the pulley 110 and 112, the two variable length runs 118a and 118b are instead inclined at the same shallow angle as one another to the direction of movement to direction movement of the sub-frame. Consequently, during movement of the sub-frame 115, these two runs 118a and 118b change length by substantially equal amounts, with the one being lengthened as the other is shortened. The little variation in the attitude of these runs in the different positions of the sub-frame 115 shown in Figures 3 to 5 is to be contrasted with the significant variation that occurs between Figures 1 and 2 in the prior art. As a result of this design, the movement of the pulley 116 to tension the belt is required predominantly to compensate for stretching of the belt with age, not for the slack that is created and taken up as the sub-frame 115 moves.

## Claims

1. A belt drive for connecting a stationary pulley (110) to a relatively movable pulley (112), comprising a first guide pulley (114) mounted in a fixed position in relation to the stationary pulley (110) and a second guide pulley (116) mounted for movement with the movable pulley (112), the second guide pulley (116) is mounted in such a manner as to be capable of a limited degree of movement relative to the movable pulley (112) and is spring biased in a direction to maintain a belt (118) in tension, two support pulleys (124,126) are provided to contact the opposite sides of the run of the belt (118) that extends from the stationary pulley (110) to the movable pulley (112); **characterized in that** one (126) of the support pulleys is stationary and the other (124) movable with the movable pulley (112), the run (118b) extending between the two support pulleys (124, 126) being one of the two runs of varying length.

2. A belt drive as claimed in claim 1, wherein the second guide pulley (116) is carried on one end of a lever arm (140), the opposite end of the lever (140) being acted upon by a spring (144) acting to rotate the lever arm (140) in a direction to increase the belt tension.

3. A belt drive as claimed in claim 1 or 2, wherein the path traced by the belt (118) around the pulleys (110, 112,114,116) includes two runs (118a,118b) that change in length during displacement of the movable pulley (112) and wherein the relative positions of the pulleys (110,112,114, 116) are such that while the length of one of said two runs (118a) increases the length of the other (118b) decreases by a substantially equal amount, whereby the length of the path traced by the belt (118) does not change significantly with the position of the movable pulley (112) relative to the stationary pulley (110).

## Patentansprüche

1. Riemenantrieb zum Verbinden einer stationären Riemenscheibe (110) mit einer relativ beweglichen Riemenscheibe (112), mit einer ersten Führungs-Riemenscheibe (114), die in einer festen Position bezüglich der stationären Riemenscheibe (110) befestigt ist, und einer zweiten Führungs-Riemenscheibe (116), die für eine Bewegung mit der beweglichen Riemenscheibe (112) befestigt ist, wobei die zweite Führungs-Riemenscheibe (116) in einer derartigen Weise befestigt ist, dass sie ein begrenztes Ausmaß einer Bewegung gegenüber der beweglichen Riemenscheibe (112) ausführen kann und in einer derartigen Richtung durch eine Feder vorgespannt ist, dass ein Riemen (118) unter Spannung gehalten wird, wobei zwei Stütz-Riemenscheiben (124, 126) vorgesehen sind, um mit entgegengesetzen Seiten des Stranges des Riemens (118) in Kontakt zu kommen, der sich von der stationären Riemenscheibe (110) zu der beweglichen Riemenscheibe (112) erstreckt;
**dadurch gekennzeichnet, dass** eine in (126) der Stütz-Riemenscheiben stationär ist und die andere (124) mit der beweglichen Riemenscheibe (112) beweglich ist, wobei der Strang (118b), der sich zwischen den beiden Stütz-Riemenscheiben (124, 126) erstreckt, einer der zwei Stränge mit sich ändernder Länge ist.

2. Riemenantrieb nach Anspruch 1, bei dem die zweite Führungs-Riemenscheibe (116) auf einem Ende eines Hebelarms (140) gehaltert ist, wobei auf das entgegengesetzte Ende des Hebels (140) eine Feder (144) wirkt, die in Richtung auf eine Drehung des Hebelarms (140) in einer Richtung zur Vergrößerung der Riemenspannung wirkt.

3. Riemenantrieb nach Anspruch 1 oder 2, bei dem der von dem Riemen (118) um die Riemenscheiben (110, 112, 114, 116) herum durchlaufene Pfad zwei Stränge (118a, 118b) einschließt, die ihre Länge während der Bewegung der beweglichen Riemenscheibe (112) ändern, wobei die relativen Positionen der Riemenscheiben (110, 112, 114, 116) derart sind, dass während die Länge eines der zwei Stränge (118a) ansteigt, die Länge des anderen Stranges (118b) in einem im Wesentlichen gleichen Ausmaß abnimmt, wodurch sich die Länge des von dem Riemen (118) durchlaufenen Pfades nicht wesentlich mit der Position der beweglichen Riemenscheibe (112) gegenüber der stationären Riemenscheibe (110) ändert.

## Revendications

1. Entraînement par courroie pour relier une poulie fixe (110) à une poulie relativement mobile (112), comprenant une première poulie de guidage (114) montée dans une position constante par rapport à la poulie fixe (110) et une seconde poulie de guidage (116) montée de façon à se déplacer avec la poulie mobile (112), la seconde poulie de guidage (116) étant montée de manière à être capable d'un degré limité de mouvement relativement à la poulie mobile (112) et étant écartée avec un ressort dans un sens pour maintenir une courroie (118) sous tension, et deux poulies de maintien (124,126) étant prévues pour entrer en contact avec les côtés opposés du parcours de la courroie (118) qui s'étend de la poulie fixe (110) à la poulie mobile (112), **caractérisé en ce qu'**une (126) des poulies de maintien est fixe et l'autre (124) est mobile avec la poulie mobile (112), le parcours (118b) s'étendant entre les deux poulies de maintien (124, 126) étant un des deux parcours de longueur variable.

2. Entraînement par courroie selon la revendication 1, dans lequel la seconde poulie de guidage (116) est portée sur une extrémité d'un bras de levier (140), l'extrémité opposée du bras de levier (140) subissant une action par un ressort (144) agissant pour faire tourner le bras de levier (140) dans un sens pour augmenter la tension de la courroie.

3. Entraînement par courroie selon la revendication 1 ou 2, dans lequel la trajectoire tracée par la courroie (118) autour des poulies (110, 112, 114, 116) comprend deux parcours (118a,118b) qui varient en longueur pendant le déplacement de la poulie mobile (112) et dans lequel les positions relatives des poulies (110,112,114, 116) sont telles que quand la longueur d'un des dits parcours (118a) augmente, la longueur de l'autre (118b) diminue d'une quantité sensiblement égale, moyennant quoi la longueur de la trajectoire tracée par la courroie (118) ne varie pas sensiblement selon la position de la poulie mobile (112) par rapport à la poulie fixe (110).
